# EUROPEAN PATENT APPLICATION

(11) **EP 2 503 474 A1**
(43) Date of publication of application: **26.09.2012**
(21) Application number: 11771761.1
(22) Date of filing: 20.04.2011
(51) Int. Cl.: G06F 17/30, G06Q 10/00

(54) **DATABASE, TICKET DATA MANAGEMENT SERVER AND INDEX DATA MANAGEMENT PROGRAM**

(30) Priority: 20.04.2010 JP 2010096974
(71) Applicant: IPS Co., Ltd., Kobe-shi, Hyogo 650-0044 (JP)
(72) Inventor: AKITA, Toshifumi, Kobe-shi Hyogo 650-0044 (JP)
(74) Representative: Maggs, Michael Norman
(86) International application number: PCT/JP2011/002325
(87) International publication number: WO 2011/132420

(57) **Abstract**

[Problems] To establish a system capable of readily making an inquiry into progress of a business and the like without carrying out a burdensome retrieving task.

[Means for solving the Problems] In a database storing an index table in which index data used for retrieval of slip data that are generated for every business unit in a business process are registered, the index data are data containing a plurality of slip processed data respectively corresponding to the slip data; the slip processed data are data in which a specific item, which contains a predetermined item suitable for grasp of a business process in each business and a key item (for example, slip number) defined in advance in each business; the content of the specific item among items respectively set up to the slip data on various kinds of businesses are associated with each other in unit of slip data; and the index data are stored in the index table in a state where the content of the specific item indicated by each of the plurality of slip processed data corresponding to the slip data can be arranged for every specific item.

## Description

### Technical Field

The present invention relates to a database for storing an index table in which index data used for retrieval of slip data, which are generated for every business unit in a business process, are registered, a slip data management server provided with this database and an index data management program contained in the slip data management server.

### Background Art

Heretofore, one so-called ERP (Enterprise Resource Planning) has become mainstream as package software for establishing a core business system for a company. In a core business system in which this ERP is contained, it is most often constructed on a relational database, and design of an application program that focuses on business processes is mostly made. Thus, it is often operated without focusing on an report output.

For the purpose of processing the large amount of business data at a high speed, analyzing the business data from various angles, and outputting reports under such a situation, various data warehouse systems that undertake a complementary role to the core business system have been provided (see Patent Literature 1).

### Prior Art Literature

### Patent Literature

Patent Literature 1: Japanese Patent Application Publication No. 2002-312208

### Summary of the Invention

### Problems to be solved by the Invention

However, in the conventional data warehouse system, business data of each business acquired from a core business system side are managed, but report data for each business are merely provided. For this reason, there has been a problem that it is required to retrieve each of report data on each related business by tracing slip numbers and to acquire them separately in order to confirm progress of each business.

Further, since slip data related to respective businesses are held at a core business system side, there has been a problem that it is also required to retrieve each of slip data on the related businesses by tracing slip numbers and to acquire them separately in order to confirm progress of the business and the like.

It is an object of the present invention to resolve the problems described above and to establish a system capable of readily making an inquiry into progress of a business and the like without carrying out a burdensome retrieving task.

### Means for Solving the Problems

According to the present invention, there is provided a database for storing an index table therein, index data being registered in the index table, the index data being used for retrieval of slip data, the slip data being generated for every business unit in a business process, wherein the index data are data that contain a plurality of slip processed data respectively corresponding to the slip data, wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses, and wherein the index data are stored in the index table in a state where the content of the specific item respectively indicated by the plurality of slip processed data corresponding to the slip data can be arranged for every specific item.

By configuring it as described above, it becomes possible to establish a system capable of readily making an inquiry into progress of a business and the like without carrying out a burdensome retrieving task.

The database may be configured so that a slip number of a business indicated by the slip data corresponding to the slip processed data and a slip number of a business indicated by the slip data generated for the business that has been carried out before the business in the business process including the business indicated by the slip data are contained in the predetermined item of the slip processed data.

The database may be configured so that the database is provided in a slip data management server that manages the slip data generated for every business unit, and the slip data management server includes an index data provider for providing, in response to a request from a client terminal, a part or all of the index data registered in the index table stored in the database to the client terminal.

Further, according to the present invention, there is provided a slip data management server for managing slip data, the slip data being generated for every business unit in a business process, the slip data management server including: a database for storing an index table therein, the index data used for retrieval of slip data being registered in the index table; and an index data provider for providing, in response to a request from a client terminal, a part or all of the index data registered in the index table stored in the database to the client terminal, wherein the index data are data that contain a plurality of slip processed data respectively corresponding to the slip data, wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses, and wherein the index data are stored in the index table in a state where the content of the specific item respectively indicated by the plurality of slip processed data corresponding to the slip data can be arranged for every specific item.

Moreover, according to the present invention, there is provided an index data management program for causing a slip data management server to manage index data, the slip data management server being provided with a database for storing an index table, the index data being registered in the index table, the index data being used for retrieval of slip data, the slip data being generated for every business unit in a business process, wherein the index data are data that contain a plurality of slip processed data respectively corresponding to the slip data, wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses, wherein the index data are stored in the index table in a state where the content of the specific item respectively indicated by the plurality of slip processed data corresponding to the slip data can be arranged for every specific item, and wherein the index data management program causes the slip data management server to execute: providing, in response to a request from a client terminal, a part or all of the index data registered in the index table stored in the database to the client terminal.

### Effects of the Invention

According to the present invention, it becomes possible to establish a system capable of readily making an inquiry into progress of a business and the like without carrying out a burdensome retrieving task.

### Brief Description of the Drawings

FIG. 1 is a block diagram showing a configuration example of a report inquiry system according to one embodiment of the present invention.
FIGS. 2A and 2B are explanatory drawings showing an example of a storage state of index data registered in an index table.
FIG. 3 is a flowchart showing an example of a database updating process.
FIG. 4 is a flowchart showing an example of an index data outputting process.
FIG. 5 is an explanatory drawing showing an example of a retrieval key input screen.
FIG. 6 is an explanatory drawing showing an example of an index data display screen.
FIG. 7 is an explanatory drawing showing an example of an extraction result display screen.
FIG. 8 is an explanatory drawing showing other example of the extraction result display screen.

### Mode for Carrying out the Invention

Hereinafter, an example of one embodiment according to the present invention will be described with reference to the drawings.

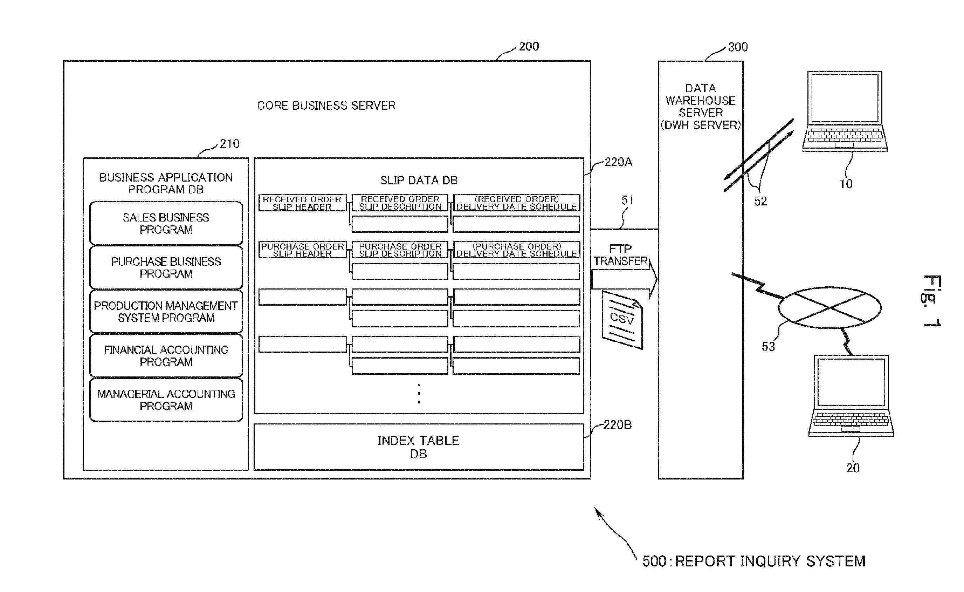

FIG. 1 is a block diagram showing a configuration example of a report inquiry system 500 according to one embodiment of the present invention. As shown in FIG. 1, the report inquiry system 500 includes a core business server 200, a data warehouse server (DWH server) 300, a client 10 and a client 20. The respective elements, which constitute the report inquiry system 500, are connected by a communication network.

In the present embodiment, the core business server 200 is connected to the DWH server 300 by means of a dedicated line 51. Further, the client 10 is connected to the DWH server 300 by means of a LAN (Local Area Network) 52. Further, the client 20 is connected to the DWH server 300 by means of the Internet 53.

The core business server 200 is a server managed by a data collector who is a collecting target of report data, for example, and has various kinds of functions for managing report information on various kinds of businesses. The core business server 200 is configured by a general information-processing apparatus provided with an OS (Operating System) and a relational DB. In this regard, the report is the general term of books and a type of slip. Further, the books denote one in which matters concerning purse of money or goods are filled, and the slip denotes one that is data to become a basis when to create books and constitutes evidence of transactions and the like on a business. In the present embodiment, the case where the core business server 200 treats only the slip data as report data will be described as an example.

In the present embodiment, the core business server 200 includes a business application program DB 210, a slip data DB 220A and an index table DB 220B.

The business application program DB 210 is a storage medium for storing programs used for various kinds of businesses. A sales business management program, a sales business management program, a production management program, a financial accounting management program, a managerial accounting management program and the like are included in the programs stored in the business application program DB 210.

The slip data DB 220A is a storage medium for storing various kinds of slip data collected and marshaled by means of various kinds of information processing using various kinds of programs stored in the business application program DB 210. In the slip data DB 220A, for example, received order slip header information, received order slip description information, delivery date schedules and the like are associated with slip data corresponding to a received order slip, and they are stored in a structure capable of retrieving them on the basis of a key, such as a slip number. In this regard, the slip number includes a received order number, a purchase order number, a shipment number, an acceptance or delivery number, a bill reference, a billing number, an accounting number and the like.

The index table DB 220B is a storage medium for storing an index table in which index data are registered. The index data are updated (or created) on the basis of relevance between respective slips indicated by the slip data that are stored in the slip data DB 220A. The index data are data used for retrieval of slip data, and contain a plurality of slip processed data respectively corresponding to the slip data. Namely, in the present embodiment, all of the data stored in the index table, which is a storage region, is called as the index data, and the respective data constituting the index data are called as the slip processed data.

Here, the slip processed data are data in which a specific item and data indicating the content of the specific item are associated with each other in unit of slip data. The specific item contains a predetermined item suitable for grasp of a business process in each business and a key item defined in advance in each business among items respectively set up to the slip data on various kinds of businesses.

The specific item in the slip processed data is set up in advance in a storage region of the core business server 200. In this regard, in the present embodiment, setup of the specific item can be changed appropriately by a manager of the core business server 200 or the like.

Further, it is preferable that the key item is data becoming an important element for specifying a slip indicated by the slip data. In the present embodiment, the case where a slip number is set up as the key item will be described as an example. In this regard, the key item is not limited to a slip number. It may not be contained in the predetermined item of the slip processed data so long as it is data contained in the slip data.

The index table DB 220B stores the index data therein in a state where the content of the specific items respectively indicated by a plurality of slip processed data corresponding to the slip data can be arranged for every specific item. Namely, they are stored in the index data so that the specific items of the plurality of slip processed data are respectively associated with each other. In this regard, the index table DB 220B may be provided in the DWH server 300.

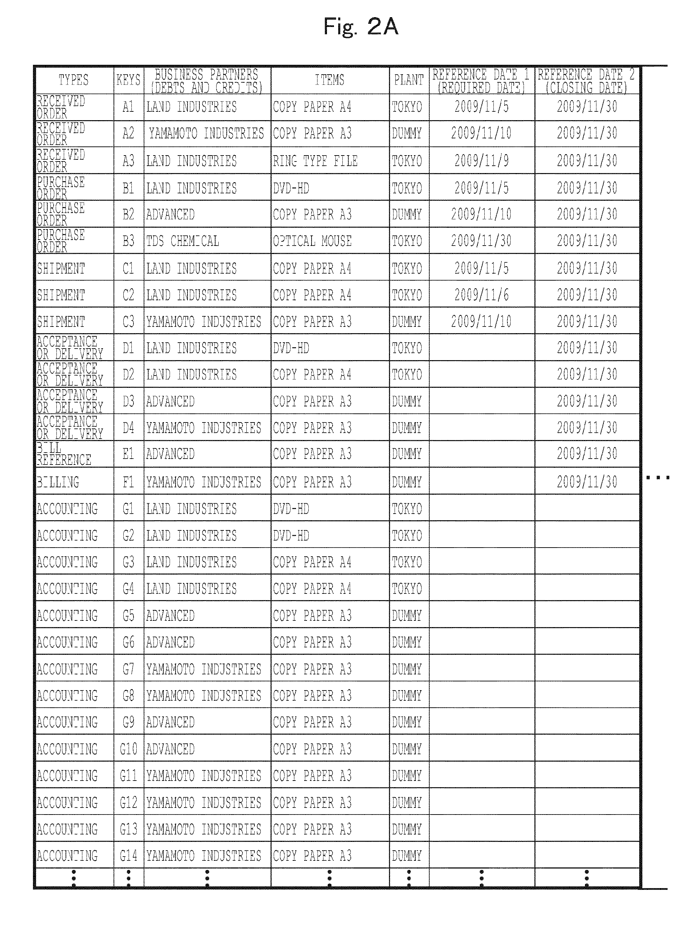

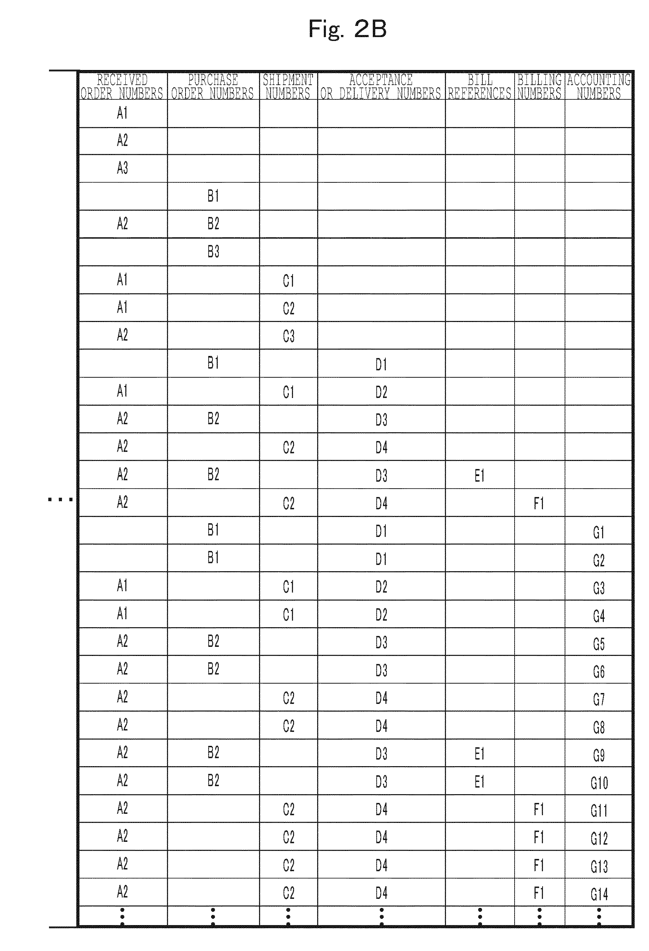

FIGS. 2A and 2B are explanatory drawings showing an example of a storage state of index data registered in the index table stored in the index table DB 220B. As shown in FIGS. 2A and 2B, the index data contain: types, which are predetermined items indicated by the stored slip processed data; business partners (debts and credits); item goods; plants; reference date 1 (required date); reference date 2 (closing date); received order numbers; purchase order numbers; shipment numbers; acceptance or delivery numbers; bill references; billing numbers; accounting numbers; required quantities (signed); required quantities (plus (+)); and required quantities (minus (-) ) . Further, the index data contain a slip number as the key item (key) indicated by the stored slip processed data. Therefore, in the present embodiment, a slip number as the predetermined item and a slip number as the key item are separately managed in each of the slip processed data contained in the index data.

Further, in the present embodiment, in the case where there is a business that has been carried out before the business indicated by the slip data in the business process including the slip number of the business indicated by the slip data respectively corresponding to the slip processed data and the business indicated by the slip data, the slip processed data containing data indicating the slip number contain the slip number of the business indicated by the slip data generated by carrying out the business. Namely, for example, slip processed data, which are slip data on a shipment business and contain data C1 indicating a shipment number, contain data A1, which contain a received order number indicating a received order business by which implementation of this shipment business is caused.

In this regard, in the case where each of the slip processed data does not contain corresponding data among items constituting the index data, the item is treated as blank data. In this regard, slip processed data that do not meet an index data creating condition stored in the index table DB 220B in advance may be configured so as not to be contained in the index data. Namely, for example, by eliminating slip processed data that contain no data indicating a slip number to create the index data, it is possible to treat only slip processed data for which relevance among slips can be grasped from the slip numbers, and this makes it possible to prevent an unnecessary processing load to manage unsuitable data.

In this regard, the core business server 200 has a function to convert various kinds of data (slip data and index data) respectively stored in the slip data DB 220A and the index table DB 220B into a CSV (Comma Separated Values) format in accordance with a predetermined extraction condition, and a function to transmit them to the DWH server 300. In this regard, in the present embodiment, the core business server 200 transfers the data file converted into the CSV format by FTP (File Transfer Protocol) to the DWH server 300.

The DWH server 300 is a server managed by a system manager of the present system, for example, and has various kinds of functions to realize a data warehouse. Here, the data warehouse means a system that analyzes relevance between the respective items among business data such as report data accumulated in chronological order. Further, the DWH server 300 has a function to register various kinds of data in a predetermined storage region by converting a file with a CSV format, which is transferred from the core business server 200, into a predetermined data format or the like. In this regard, the DWH server 300 may be configured so as to extract data according to the respective storage regions from a state of the CSV format without carrying out conversion of data formats.

Each of the clients 10, 20 is an information-processing apparatus provided with a CPU (Central Processing Unit) , a ROM, a RAM, a display section and the like. In the present embodiment, each of the clients 10, 20 has various kinds of applications available for treating report data, such as a Web browser, spreadsheet software and the like. Further, in the present embodiment, each of the clients 10, 20 has a function to define a query (a retrieval item, a retrieval key, an extraction key and the like) for acquiring necessary report data from the DWH server 300 in response to an operational input by a user, for example, and a function to transmit it to the DWH server 300.

In the present embodiment, the client 10 has a function to communicate with the DWH server 300 via a LAN and a function to output the data acquired from the DWH server 300 onto the display section by means of the predetermined spreadsheet software.

Further, the client 20 has a function to communicate with the DWH server 300 via the Internet and a function to output the data acquired from the DWH server 300 onto the display section by means of the Web browser.

In this regard, in the present embodiment, each of the clients 10, 20 has a function to output the index table stored in the index table DB 220B of the core business server 200 onto the display section using predetermined application software.

In this regard, the configuration of the report inquiry system is not limited to this, and it may be configured so that the clients 10, 20 are allowed to directly transmit and receive data to and from the core business server 200 without the DWH server 300, for example. Namely, each of the clients 10, 20 may be configured so as to be capable of accessing the index table DB 220B.

Next, an operation of the core business server 200 in the report inquiry system 500 according to the present embodiment will be described with reference to the drawings. In this regard, the content of operation and processes particularly with no relationship to the present invention may be omitted.

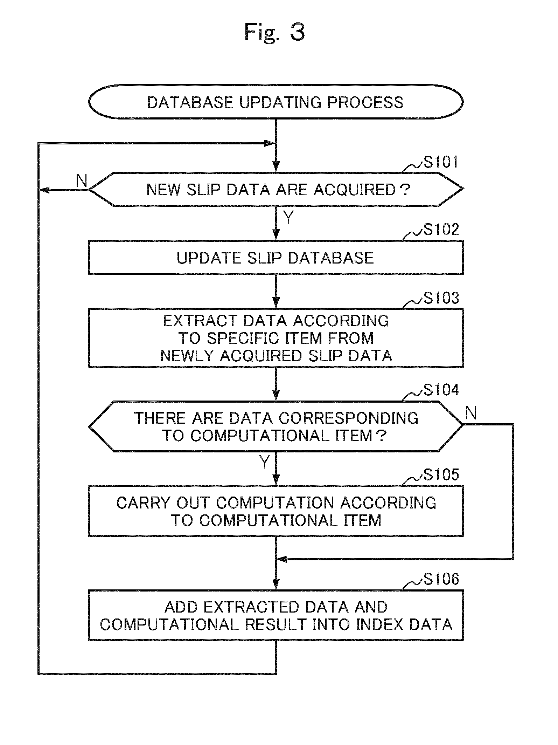

FIG. 3 is a flowchart showing an example of a database updating process carried out by the core business server 200. In the database updating process, a process to update the slip data DB 220A and the index table DB 220B in the core business server 200 is carried out.

In the database updating process, the core business server 200 first determines whether new slip data are acquired or not (Step S101).

In the case where it is determined that the new slip data are acquired ("Yes" at Step S101), the core business server 200 updates the slip database 220A (Step S102), and extracts data according to a predetermined item from the newly acquired slip data (Step S103).

Here, the core business server 200 extracts the predetermined item from the slip data on the basis of an extraction condition stored in advance in a storage medium included in the core business server 200. It is preferable that a condition to extract an item indicating relevance between other slips or an item indicating an element that becomes a key of each slip is set up in the slip data as the extraction condition. In the present embodiment, the core business server 200 extracts data corresponding to a specific item set up as the slip processed data from the slip data.

When the data corresponding to the specific item set up as the slip processed data are extracted from the slip data, the core business server 200 determines whether there are data corresponding to a predetermined computational item in the extracted data or not (Step S104). Here, in the case where it is determined that there are no data corresponding to the predetermined computational item ("No" at Step S104), the core business server 200 causes the process to shift to Step S106 (will be described later).

On the other hand, in the case where it is determined that there are the data corresponding to the predetermined computational item ("Yes" at Step S104), the core business server 200 carries out arithmetic processing in accordance with arithmetic expressions (including an arithmetic expression using one or two or more other items in the index data) set up in advance in the computational item (Step S105).

When a computational result is acquired by carrying out the computation, the core business server 200 adds the extracted data and the computational result into the index data (Step S106), and causes the process to shift to Step S101. This makes it possible to cut out the need to carry out arithmetic processing when to provide index data to the DWH server 300 or the like, and it is possible to eliminate an arithmetic program for this process.

In this regard, in the present embodiment, all of the items that the slip processed data may contain are set up in the index data.

Next, operations of the core business server 200, the DWH server 300 and the clients 10, 20 in the report inquiry system 500 according to the present embodiment will be described with reference to the drawings. In this regard, the content of operations and processes particularly with no relationship to the present invention may be omitted.

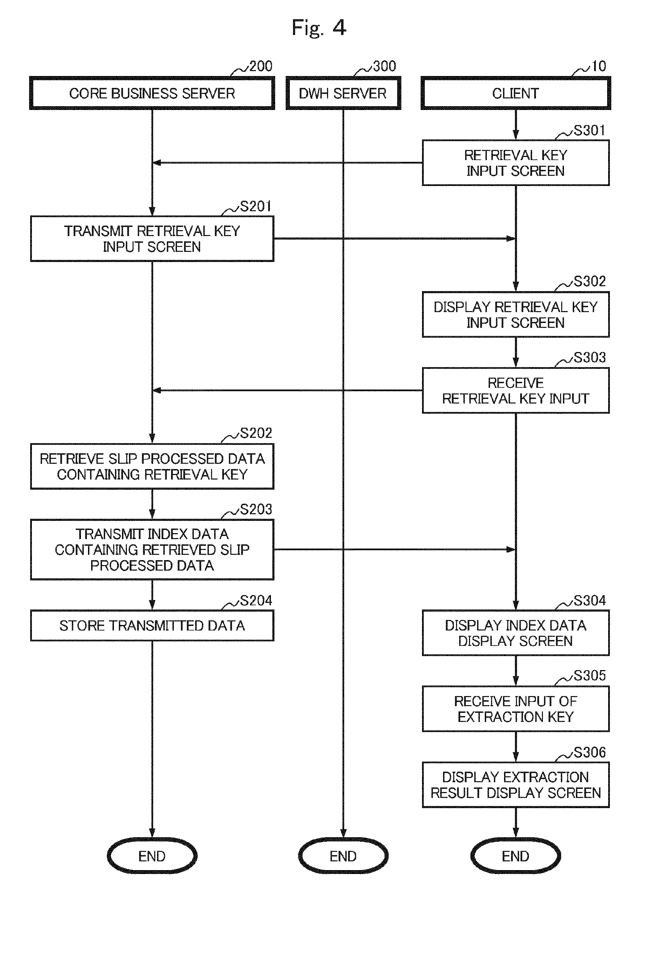

FIG. 4 is a flowchart showing an example of an index data outputting process carried out by the DWH server 300 and the client 10. In the index data outputting process, a process in which the client 10 acquires the index data (a part or all of the index data) from the core business server 200 via the DWH server 300 to output them is carried out. In this regard, since a kind of communication network of the client 10 is different from that of the client 20 merely, the case of using the client 10 will be described as an example in the present embodiment. Further, the DWH server 300 in the present embodiment merely assists in carrying out communication between the core business server 200 and the client 10 (for example, authentication of a client and the like). Therefore, explanation about an operation of the DWH server 300 is omitted hereinafter.

In the index data outputting process, the client 10 first transmits a request for a retrieval key input screen to the core business server 200 in response to an operational input by the user, for example (Step S301).

When the request for the retrieval key input screen is received, the core business server 200 transmits the retrieval key input screen in response to the received request for the retrieval key input screen (Step S201). In the present embodiment, the core business server 200 transmits, to the client 10, data for displaying a screen in which items set up in the index data can be displayed in a pull-down format as the retrieval key input screen.

When the retrieval key input screen is received, the client 10 causes the display section to display the retrieval key input screen (Step S302).

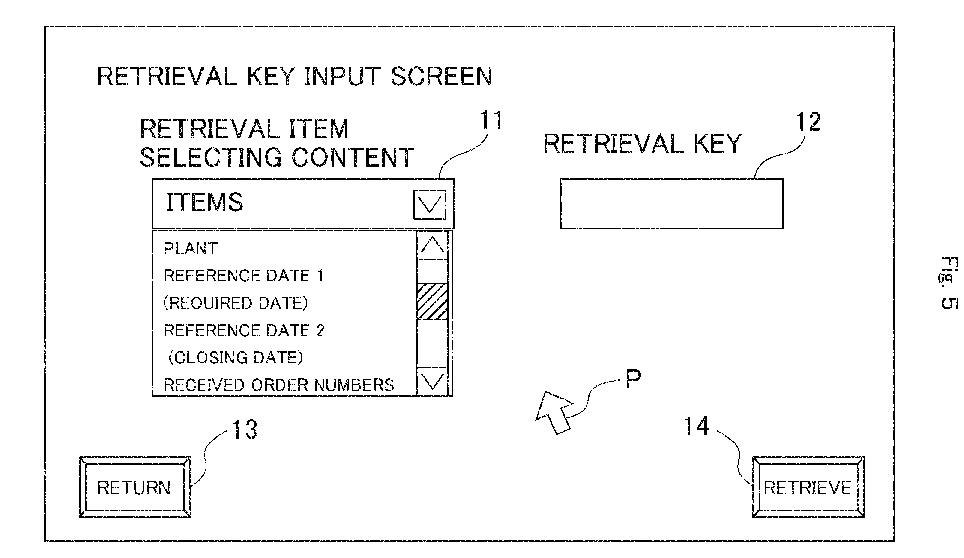

FIG. 5 is an explanatory drawing showing an example of the retrieval key input screen. As shown in FIG. 5, a retrieval item display region 11 displayed so that an item set up in the index data can be selected in a pull-down format, a retrieval key entry region 12 for receiving an input of a retrieval key by the user, a return button 13 for receiving a request to switch the display screen outputted to the display section into other display screen, and a retrieval button 14 are provided in the retrieval key input screen.

When selection of a retrieval item by means of a cursor P operable by a mouse operation, for example, is received, the client 10 sets up the selected retrieval item into a temporarily selected state. Then, when selection of the retrieval button 14 is received, the client 10 determines that the selection of the retrieval item, which is in the temporarily selected state, is received (Step S303), and transmits the selected retrieval item and the retrieval key inputted into the retrieval key entry region 12 to the core business server 200.

When the retrieval item and the retrieval key are received, the core business server 200 retrieves slip processed data containing the retrieval key in the data content corresponding to the received retrieval item among the slip processed data contained in the index data (Step S202). In this regard, in the case where the retrieval key is blank data at this time, the core business server 200 may be configured so as to retrieve all of the slip processed data containing data corresponding to the received retrieval item, or may be configured so as to transmit retrieval error notice to a client.

When the slip processed data are retrieved, the core business server 200 transmits the index data containing the retrieved slip processed data to the client 10 (Step S203), and stores the transmitted data in a predetermined storage medium (Step S204). Then, the core business server 200 terminates the processing herein.

When the index data are received, the client 10 causes the display section to display an index data display screen (Step S304).

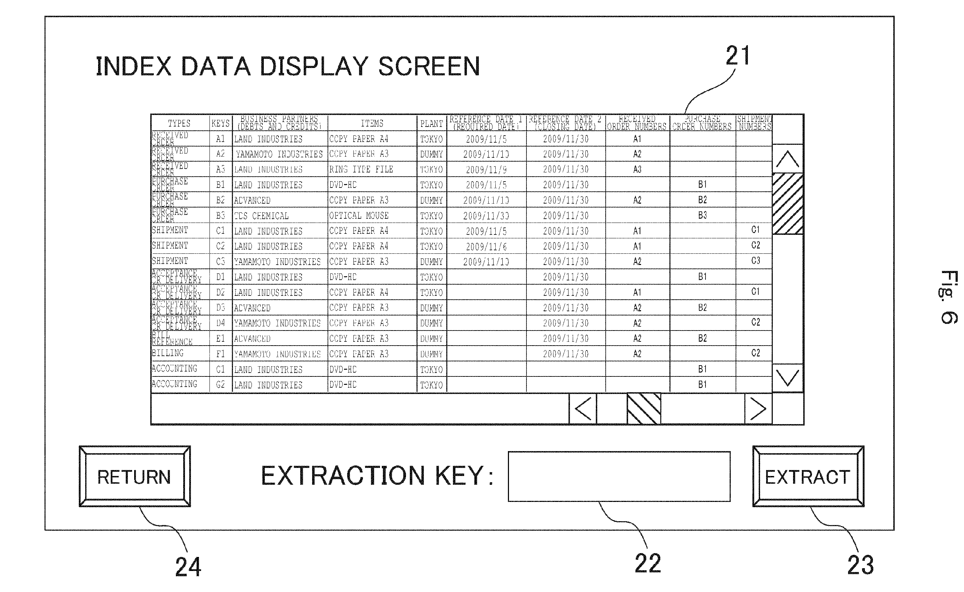

FIG. 6 is an explanatory drawing showing an example of the index data display screen. As shown in FIG. 6, an index data display region 21 for visibly displaying index data in a tabular form, an extraction key entry region 22, an extraction button 23 and a return button 24 are provided in the index data display screen. In this regard, a scale size of the index data displayed in the index data display region 21 can be changed by means of an operation of a keyboard or the like with which the client 10 is provided, for example.

Here, the extraction key entry region 22 receives an input of the extraction key from the user (Step S305) . In the present embodiment, the client 10 receives a selection operation (for example, a drag operation or the like) against the content of slip processed data contained in the index data, which is displayed in the index data display region 21, by means of the cursor P, by which the client 10 receives a temporary input of the extraction key. In this regard, the extraction key may be configured so as to be capable of carrying out a temporary input of all of the data contained in the index table, or data that can be selected as the extraction key may be configured so as to be restricted in advance.

When selection of the extraction button 23 by means of the cursor P is received in a state where the extraction key is temporarily inputted, the client 10 determines that an input of the extraction key is received, and extracts the index data containing the extraction key from the index table to cause the display section to display them as an extraction result display screen (Step S306).

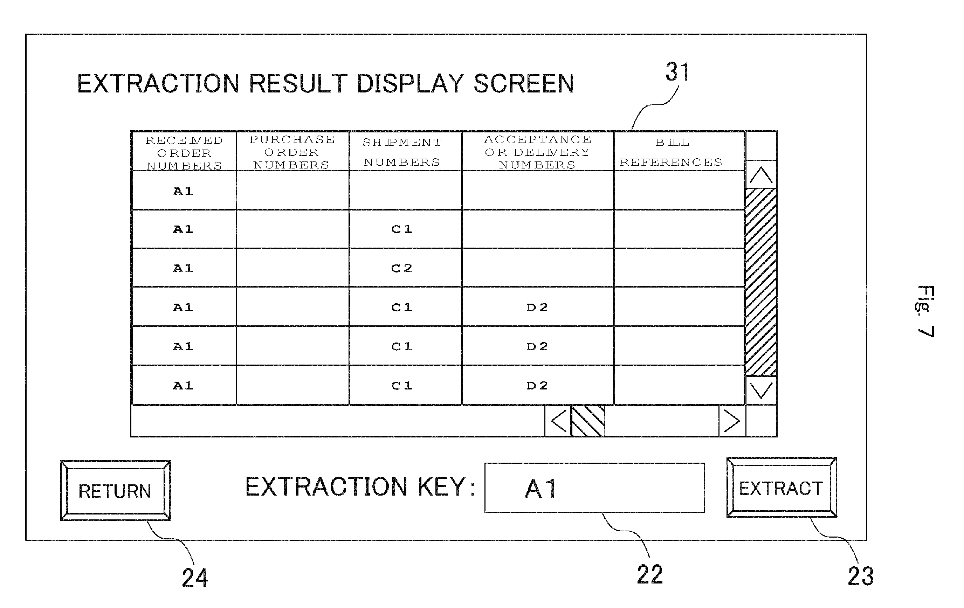

FIG. 7 is an explanatory drawing showing an example of the extraction result display screen when a received order number "A1" is received as the extraction key. As shown in FIG. 7, an extraction result display region 31, an extraction key entry region 22, an extraction button 23 and a return button 24 are provided in the extraction result display screen.

In the present embodiment, the client 10 edits the items of the index data so that the items indicating the slip numbers are arranged in a chronological order and in a general order that the corresponding business is generated in the business process when an extraction result is displayed in the extraction result display region 31. By configuring it in this manner, it is possible to recognize relevance between data necessary for the user. In this regard, in the case where a generating order is generally confused as for the received order number and the purchase order number, for example, the core business server 200 edits the index data in a predetermined order defined in advance.

Further, in the present embodiment, the client 10 is allowed to receive a key corresponding to an item other than the slip number as the extraction key.

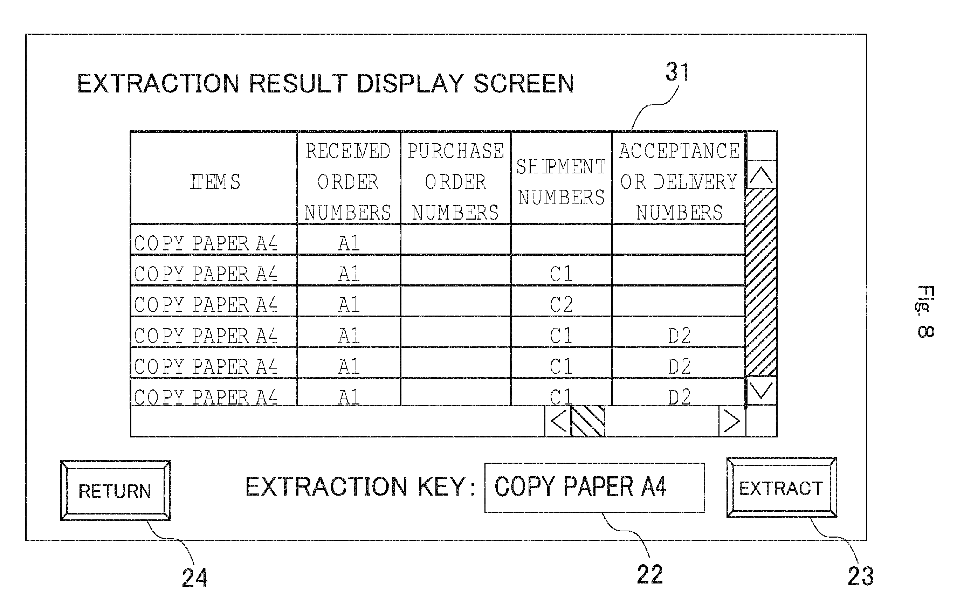

FIG. 8 is an explanatory drawing showing an example of the extraction result display screen when a word "copy paper A4" is received as the extraction key. As shown in FIG. 8, index data containing slip processed data in which "copy paper A4" is set up in the item "item goods" are displayed in the extraction result display region 31. By configuring it in this manner, it is possible to treat even a plurality of slip processed data, to each of which a slip number is not attached, using the index data in a panoramic manner. As a result, in the case where the user tries to acquire slip data according to his or her purpose using the client 10, for example, it is possible to reduce a work burden, to improve accuracy of retrieval, and to speed up retrieval.

Namely, for example, when the user of the client 10 tries to create a bill using a function of the client 10, it is possible to grasp slip data necessary to create a bill and slip data related to the necessary data in a panoramic manner. This makes it possible to improve work efficiency. The larger the amount of slip data to be treated becomes, the more marked such an effect becomes.

As explained above, in the embodiment described above, the database is configured so that: in the database (for example, the index table DB 220B) for storing the index tables in which the index data used for retrieval of slip data that are generated for every business unit in a business process are registered, the index data are data that contain a plurality of slip processed data respectively corresponding to the slip data; the slip processed data are data in which a specific item and the content of the specific item are associated with each other in unit of slip data, and the specific item contains a predetermined item (for example, slip numbers such as received order numbers, purchase order numbers, shipment numbers, acceptance or delivery numbers, bill references, billing numbers, and accounting numbers) suitable for grasp of a business process in each business and a key item (for example, slip numbers) defined in advance in each business among items respectively set up to the slip data on various kinds of businesses; and the index data are stored in the index table in a state where the content of the specific item respectively indicated by the plurality of slip processed data corresponding to the slip data can be arranged for every specific item. Therefore, it becomes possible to establish a system capable of readily making an inquiry into progress of a business and the like without carrying out a burdensome retrieving task.

Namely, relevance among slips is defined in advance, and items available as an extraction condition when data used for progress of the business and the like are extracted are prepared in advance. Therefore, it becomes possible to reduce effort required for a retrieving task necessary when to carry out an inquiry work of the slip data.

Further, in the embodiment described above, the database (for example, the index table DB 220B) is configured so that a slip number of a business indicated by the slip data corresponding to the slip processed data and a slip number of a business (for example, a received order number with respect to a shipment number) indicated by the slip data generated for the business that has been carried out before the business in the business process including the business indicated by the slip data are contained in the predetermined item of the slip processed data. Therefore, it becomes possible to establish a system capable of readily recognizing relevance between slips.

Further, in the embodiment described above, the database (for example, the index table DB 220B) is configured so that the database is provided in a slip data management server (for example, the core business server 200) that manages the slip data generated for every business unit, and the slip data management server provides, in response to a request from a client terminal (for example, the client 10, 20), a part or all of the index data registered in the index table stored in the database to the client terminal. Therefore, it becomes possible to provide a system capable of readily making an inquiry into progress of a business and the like without carrying out a burdensome retrieving task. Further, since the slip data management server reads a plurality of tables by means of key items, it is possible to improve a processing speed required for provision of index data.

Further, in the embodiment described above, the slip data management server (for example, the core business server 200) for managing slip data, the slip data being generated for every business unit in a business process is configured so as to include the database (for example, the index table DB 220B) for storing an index table therein, the index data used for retrieval of slip data being registered in the index table and to provide, in response to a request from a client terminal (for example, the client 10, 20), a part or all of the index data registered in the index table stored in the database to the client terminal, and so that: the index data are data that contain a plurality of slip processed data respectively corresponding to the slip data; the slip processed data are data in which a specific item and the content of the specific item are associated with each other in unit of slip data, and the specific item contains a predetermined item (for example, slip numbers such as received order numbers, purchase order numbers, shipment numbers, acceptance or delivery numbers, bill references, billing numbers, and accounting numbers) suitable for grasp of a business process in each business and a key item (for example, slip numbers) defined in advance in each business among items respectively set up to the slip data on various kinds of businesses; and the index data are stored in the index table in a state where the content of the specific item respectively indicated by the plurality of slip processed data corresponding to the slip data can be arranged for every specific item. Therefore, it becomes possible to provide a system of readily making an inquiry into progress of a business and the like.

In this regard, although the case where the core business server 200 transmits the index data in response to the request from the client 10 has been explained as an example in the embodiment described above, a method of utilizing the index data is not limited to this. Namely, for example, the core business server 200 may be configured so as to narrow down whereabouts of necessary slip data by means of index data prepared in advance in order to retrieve the necessary slip data in the case where the slip data according to the request from the client 10 are outputted. By configuring it in this manner, the slip data management server (for example, the core business server 200) can first narrow down the slip data to be retrieved using the index data when the slip data according to a retrieval request of the user are retrieved from enormous amounts of slip data. Therefore, it becomes possible to reduce a processing load on a retrieval process.

In this regard, although it has not been referred to particularly in the embodiment described above, the core business server 200 may be configured so as to create in advance data potentially requested from the client 10, 20 (for example, bill data for outputting a bill) without waiting for a request from the client 10, 20. In this case, it may be configured so that basis information of data to be automatically created (for example, a kind of slip data necessary to create bill data or the like), an initiation condition of an automatic creation process (for example, a condition as a trigger to start the automatic creation process, such as issue of a slip number of a predetermined business, time and date and the like) and the like are set up in the storage region of the core business server 200. Hereinafter, an operation of the core business server 200 in this case will briefly be described.

For example, data indicating a method of creating bill data for every business (bill creating data) are set up in the storage region of the core business server 200 as the basis information on data to be created automatically, and time and date are set up as the initiation condition of the automatic creation process. In this case, a timer is provided in the core business server 200 in advance to monitor whether the initiation condition of the automatic creation process is met or not. Then, in the case where it is determined that the initiation condition of the automatic creation process is met, the core business server 200 refers to the bill creating data, and carries out a process for acquiring data necessary to create bill data from the slip data DB 220A or the like.

When the data necessary to create bills are acquired, the core business server 200 creates bill data on the basis of the bill creating data. Then, by associating the created bill data with slip processed data of the corresponding business, it is possible to reduce a burden required for acquisition of a bill when the user wants to acquire the bill. In this regard, various kinds of methods, for example, by providing a bill number to an item of index data, are thought for association between the slip processed data and the bill data.

### Industrial Applicability

According to the present invention, it is useful to establish a system capable of readily making an inquiry into progress of a business and the like without carrying out a burdensome retrieving task.

### Explanation of Reference numerals

- 10: client
- 20: client
- 51: dedicated line
- 52: LAN
- 53: Internet
- 200: core business server
- 210: business application program DB
- 220A: slip data DB
- 220B: index table DB
- 300: DWH server
- 500: report inquiry system

## Claims

1. A database for storing an index table therein, index data being registered in the index table, the index data being used for retrieval of slip data, the slip data being generated for every business unit in a business process,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses, and
wherein the index data are stored in the index table in a state where the content of the specific item respectively indicated by the plurality of slip processed data corresponding to the slip data can be arranged for every specific item.

2. The database according to claim 1, wherein a slip number of a business indicated by the slip data corresponding to the slip processed data and a slip number of a business indicated by the slip data generated for the business that has been carried out before the business in the business process including the business indicated by the slip data are contained in the predetermined item of the slip processed data.

3. The database according to claim 1 or 2, wherein the database is provided in a slip data management server that manages the slip data generated for every business unit, and
wherein the slip data management server comprises an index data provider for providing, in response to a request from a client terminal, a part or all of the index data registered in the index table stored in the database to the client terminal.

4. A slip data management server for managing slip data, the slip data being generated for every business unit in a business process, the slip data management server comprising:
a database for storing an index table therein, the index data used for retrieval of slip data being registered in the index table; and
an index data provider for providing, in response to a request from a client terminal, a part or all of the index data registered in the index table stored in the database to the client terminal,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses, and
wherein the index data are stored in the index table in a state where the content of the specific item respectively indicated by the plurality of slip processed data corresponding to the slip data can be arranged for every specific item.

5. An index data management program for causing a slip data management server to manage index data, the slip data management server being provided with a database for storing an index table, the index data being registered in the index table, the index data being used for retrieval of slip data, the slip data being generated for every business unit in a business process,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses,
wherein the index data are stored in the index table in a state where the content of the specific item respectively indicated by the plurality of slip processed data corresponding to the slip data can be arranged for every specific item, and
wherein the index data management program causes the slip data management server to execute:
providing, in response to a request from a client terminal, a part or all of the index data registered in the index table stored in the database to the client terminal.

## Amended claims

### Amended claims under Art. 19.1 PCT

**1.** (Currently Amended) A database for storing an index table therein, index data being registered in the index table, the index data being used for retrieval of slip data, the slip data being generated for every business unit in a business process,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses,
wherein the index data are stored in the index table in a state where the content of the specific item respectively indicated by the plurality of slip processed data corresponding to the slip data can be arranged for every specific item. The database according to claim 1, wherein a slip number of a business indicated by the slip data corresponding to the slip processed data and a slip number of a business indicated by the slip data generated for the business that has been carried out before the business in the business process including the business indicated by the slip data are contained in the predetermined item of the slip processed data, and
wherein a slip number of a business indicated by the slip data corresponding to the slip processed data and a slip number of a business indicated by the slip data generated for the business that has been carried out before the business in the business process including the business indicated by the slip data are contained in the predetermined item of the slip processed data.

**2.** (Cancelled)

**3.** (Currently Amended) The database according to claim 1, wherein the database is provided in a slip data management server that manages the slip data generated for every business unit, and
wherein the slip data management server comprises an index data provider for providing, in response to a request from a client terminal, a part or all of the index data registered in the index table stored in the database to the client terminal.

**4.** (Currently Amended) A slip data management server for managing slip data, the slip data being generated for every business unit in a business process, the slip data management server comprising:
a database for storing an index table therein, the index data used for retrieval of slip data being registered in the index table; and
an index data provider for providing, in response to a request from a client terminal, a part or all of the index data registered in the index table stored in the database to the client terminal,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses,
wherein the index data are stored in the index table in a state where the content of the specific item respectively indicated by the plurality of slip processed data corresponding to the slip data can be arranged for every specific item, and
wherein a slip number of a business indicated by the slip data corresponding to the slip processed data and a slip number of a business indicated by the slip data generated for the business that has been carried out before the business in the business process including the business indicated by the slip data are contained in the predetermined item of the slip processed data.

**5.** (Currently Amended) An index data management program for causing a slip data management server to manage index data, the slip data management server being provided with a database for storing an index table, the index data being registered in the index table, the index data being used for retrieval of slip data, the slip data being generated for every business unit in a business process,
wherein the index data are data that contain a plurality of slip processed data respectively corresponding to the slip data,
wherein the slip processed data are data in which a specific item and the content of the specific item are associated with each other in unit of slip data, and the specific item contains a predetermined item suitable for grasp of a business process in each business and a key item defined in advance in each business among items respectively set up to the slip data on various kinds of businesses,
wherein the index data are stored in the index table in a state where the content of the specific item respectively indicated by the plurality of slip processed data corresponding to the slip data can be arranged for every specific item,
wherein the index data management program causes the slip data management server to execute:
providing, in response to a request from a client terminal, a part or all of the index data registered in the index table stored in the database to the client terminal, and
wherein a slip number of a business indicated by the slip data corresponding to the slip processed data and a slip number of a business indicated by the slip data generated for the business that has been carried out before the business in the business process including the business indicated by the slip data are contained in the predetermined item of the slip processed data.
